# EUROPEAN PATENT APPLICATION

(11) **EP 3 115 981 A1**
(43) Date of publication of application: **11.01.2017**
(21) Application number: 15757900.4
(22) Date of filing: 19.02.2015
(51) Int. Cl.: G08B 25/10, G08B 31/00, G08C 15/00, G08C 17/00, H04M 11/04, H04W 4/04

(54) **DISASTER RESPONSE SYSTEM, DISASTER RESPONSE METHOD, DISASTER-SENSING DEVICE, AND PROCESSING METHOD THEREFOR**

(30) Priority: 05.03.2014 JP 2014043115
(71) Applicant: NEC Corporation, Tokyo 108-8001 (JP)
(72) Inventor: NODA, Youtarou, Tokyo 108-8001 (JP)
(74) Representative: Vossius & Partner Patentanwälte Rechtsanwälte mbB
(86) International application number: PCT/JP2015/000776
(87) International publication number: WO 2015/133076

(57) **Abstract**

Provided is a technology capable of widening the detection and prediction range of disaster and increasing precision. In a disaster response system, each disaster-sensing device has multiple sensors obtaining each of the multiple kinds of measurement data at the arrangement position in a chronological order, a detection processing section processing at least one kind of measurement data obtained by at least one of the multiple sensors and generating detection index data of disaster generation detection, a prediction processing section processing the multiple kinds of measurement data obtained by the multiple sensors in a chronological order and generating prediction index data of disaster generation prediction, and a wireless communication section transmitting a wireless signal indicating at least one of the detection index data and the prediction index data. A server device has an information collection section receiving, from a relay device, the detection index data at each arrangement position and the prediction index data at each arrangement position sent from each disaster-sensing device.

## Description

### [Technical Field]

The present invention relates to a technology for predicting and detecting a disaster.

### [Background Art]

Recent years, abnormal weather, such as a localized downpour, a tornado, a torrential rainfall, and a heavy snowfall, has been occurring frequently at various places, and, influenced by such abnormal weather, various types of natural disasters, such as windstorm and flood damage, snow damage, lightning damage, and landslide disasters, have been occurring at various places. Natural disasters are caused by not only such abnormal weather but also various natural phenomena, such as an earthquake and a volcanic eruption. With regard to the types of disasters, in addition to natural disasters, there is also a possibility that disasters related to structures, such as buildings, factories, and various types of facilities, and constructions, such as civil engineering structures, occur.

To keep such disasters to a minimum, predicting and detecting disasters speedily and highly accurately are important issues. With regard to disasters to constructions, a bridge monitoring system and the like, which detect abnormalities of bridges, have been provided. With regard to prediction of natural disasters, for example, meteorological observatories and prefectural governments issue landslide alert information based on a soil water index, a predicted accumulated precipitation amount per predetermined time, and the like. The soil water index is estimated using a method referred to as a tank model. Estimating a degree of risk of landslide based on a rainfall amount using a stability analysis method of a slope of semi-infinite length has also been carried out.

On the other hand, with regard to detection of natural disasters, there exists a technology in which a plurality of sensors with high accuracy are buried in a rock-bed layer under the ground, and, using vibration information obtained by these sensors, formation of a natural dam due to deep-seated landslide is detected. Various types of sensor devices that detect an occurrence of a landslide disaster, such as a wire sensor and a clinometer, also exist.

In PTL 1 cited below, a collapse monitoring system that detects deformation or collapse of slopes, such as a mountainous region and a cliff, is proposed. In the system, a plurality of wireless communication terminals that have sensors for detecting abnormalities are placed on mountain slopes, and the wireless communication terminals perform multi-hop communication and deliver abnormality information detected by the respective sensors to a base station. In PTL 2 cited below, a system that performs prediction of disaster occurrence, such as a cliff failure, a mudslide, and a landslide, and evacuation recommendation is proposed. In this system, fluctuation data detected by a plurality of sensors are collected by a detection relay device by means of RFID (Radio Frequency Identification) communication, transmitted from the detection relay device to a server by means of wireless communication, and analyzed.

### [Citation List]

### [Patent Literature]

[PTL 1] Japanese Patent Application Laid-Open Publication No. 2007-18126
[PTL 2] Japanese Patent Application Laid-Open Publication No. 2007-128187

### [Summary of Invention]

### [Technical Problem]

However, in the above-described methods, it is difficult to enlarge the range and increase the accuracy of detection and prediction of disasters. For example, since conventional methods of issuing landslide alert information do not take into account individual local conditions sufficiently, prediction accuracy is likely to decrease. In conventional natural disaster detection methods, an installation cost and a maintenance cost of sensor devices are likely to increase, which makes it difficult to enlarge the range of detection. On the other hand, in the method disclosed in PTL 1 or 2, the frequency of collection and transmission of fluctuation data by a detection relay device is required to be raised for achieving disaster prediction with high accuracy, which makes it difficult to conserve electric power of the detection relay device.

The present invention is made in consideration of the above-described situation, and an object of the present invention is to provide a technology that enables enlarging the range and increasing the accuracy of detection and prediction of a disaster.

### [Solution to Problem]

A disaster response system according to the present invention relates the system including: a server device; a relay device that is communicable with the server device; and a plurality of disaster-sensing devices each of which is arranged at a predetermined position, the predetermined position being within a range wirelessly communicable with at least one of another disaster-sensing device and the relay device. Each of the disaster-sensing devices includes: a plurality of sensors each of which obtains one of a plurality of types of measurement data at an arrangement position in time series form; a detection processing unit that processes at least one of the plurality of types of measurement data obtained by at least one of the plurality of sensors and generating detection index data that serve as an index of disaster occurrence detection; a prediction processing unit that processes the plurality of types of measurement data obtained by the plurality of sensors in time series form and generates prediction index data that serve as an index of disaster occurrence prediction; and a wireless communication circuit that transmits a wireless signal indicating at least one of the detection index data generated by the detection processing unit and the prediction index data generated by the prediction processing unit, and the server device includes an information collection unit that receives, from the relay device, the detection index data at each arrangement position and the prediction index data at each arrangement position transmitted from each of the plurality of disaster-sensing devices.

A disaster response method according to the present invention relates the disaster response method executed by a disaster response system including: a server device; a relay device that is communicable with the server device; and a plurality of disaster-sensing devices each of which is arranged at a predetermined position, the predetermined position being within a range wirelessly communicable with at least one of another disaster-sensing device and the relay device. The disaster response method according to the second aspect includes: in each of the disaster-sensing devices: obtaining each one of a plurality of types of measurement data at an arrangement position in time series form; processing at least one type of measurement data among the plurality of types of measurement data obtained and generating detection index data that serve as an index of disaster occurrence detection; processing the plurality of types of measurement data obtained in time series form and generating prediction index data that serve as an index of disaster occurrence prediction; and transmitting a wireless signal indicating at least one of the detection index data and the prediction index data, and in the server device, receiving, from the relay device, the detection index data at each arrangement position and the prediction index data at each arrangement position transmitted from each of the plurality of disaster-sensing devices.

A disaster-sensing device according to the present invention, includes: a detection processing unit that processes at least one type of measurement data obtained by a plurality of sensors each of which obtains one of a plurality of types of measurement data at an arrangement position in time series and generating detection index data that serve as an index of disaster occurrence detection; and a prediction processing unit that processes the plurality of types of measurement data obtained by at least one of the plurality of sensors in time series and generating prediction index data that serve as an index of disaster occurrence prediction; and a wireless communication circuit that transmits a wireless signal indicating at least one of the detection index data generated by the detection processing unit and the prediction index data generated by the prediction processing unit.

A processing method of a disaster-sensing device according to the present invention, includes: obtaining a plurality of types of measurement data at an arrangement position in time series form; processing at least one type of measurement data among the plurality of types of measurement data obtained and generating detection index data that serve as an index of disaster occurrence detection; processing the plurality of types of measurement data obtained in time series form and generating prediction index data that serve as an index of disaster occurrence prediction; and transmitting a wireless signal indicating at least one of the detection index data and the prediction index data.

### [Advantageous Effects of Invention]

The above-described respective aspects enable providing a technology that enables enlarging the range and increasing the accuracy of detection and prediction of a disaster.

### [Brief Description of Drawings]

[Fig. 1] Fig. 1 is a diagram conceptually illustrating a configuration of a disaster response system (system) in a first exemplary embodiment;
[Fig. 2] Fig. 2 is a diagram conceptually illustrating a processing configuration example of a disaster-sensing device (sensing device) in the first exemplary embodiment;
[Fig. 3] Fig. 3 is a diagram conceptually illustrating a processing configuration example of a server device in the first exemplary embodiment;
[Fig. 4] Fig. 4 is a sequence chart illustrating an operation example of the disaster response system (system) in the first exemplary embodiment;
[Fig. 5] Fig. 5 is a diagram conceptually illustrating a processing configuration example of a disaster-sensing device (sensing device) in a second exemplary embodiment;
[Fig. 6] Fig. 6 is a diagram conceptually illustrating a processing configuration example of a server device in the second exemplary embodiment;
[Fig. 7] Fig. 7 is a sequence chart illustrating an operation example of a disaster response system (system) in the second exemplary embodiment;
[Fig. 8] Fig. 8 is a diagram conceptually illustrating a processing configuration example of a disaster-sensing device (sensing device) in a third exemplary embodiment;
[Fig. 9] Fig. 9 is a diagram conceptually illustrating a processing configuration example of a server device in the third exemplary embodiment;
[Fig. 10] Fig. 10 is a diagram conceptually illustrating a processing configuration example of a server device in an example; and
[Fig. 11] Fig. 11 is a diagram conceptually illustrating a specific example of transitions among operation modes.

### [Description of Embodiments]

Hereinafter, exemplary embodiments of the present invention will be described. In the respective exemplary embodiments below, a disaster response system and a disaster response method that perform prediction and detection of disasters are exemplified. The types of disasters to be dealt with in the respective exemplary embodiments below are not limited to specific ones.

### [First Exemplary Embodiment]

### [System configuration and hardware configuration]

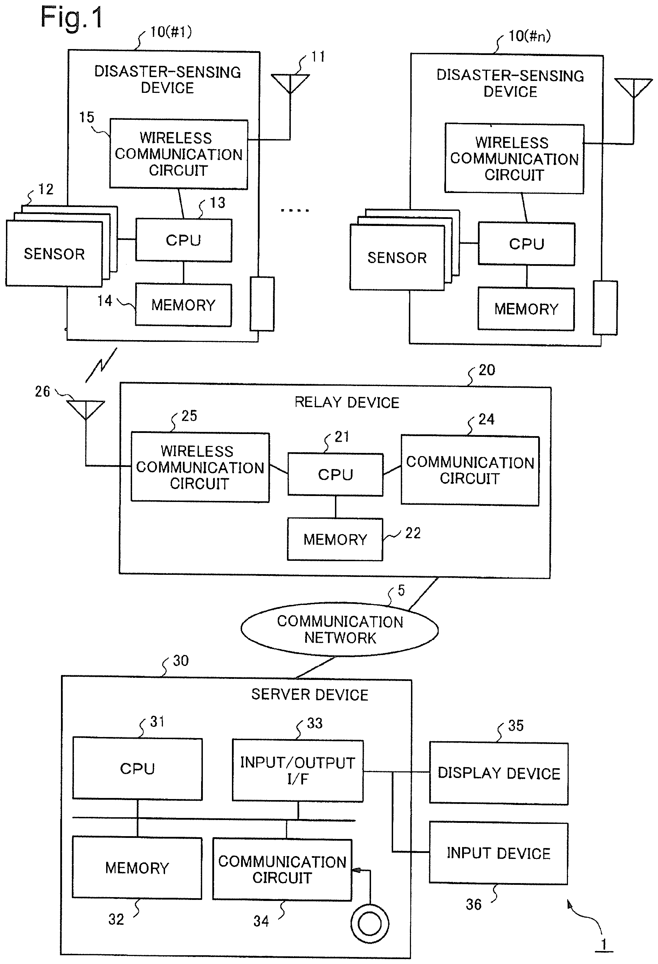

Fig. 1 is a diagram conceptually illustrating a configuration of a disaster response system 1 in a first exemplary embodiment. Hereinafter, there will be a case in which the disaster response system 1 is also referred to as a system 1 in an abbreviated manner. As illustrated in Fig. 1, the system 1 includes a server device 30, a relay device 20, which is communicable with the server device 30, and a plurality of disaster-sensing devices 10. Each disaster-sensing device 10 is arranged at a predetermined position within a range wirelessly communicable with at least one of the other disaster-sensing devices 10. At least one of the plurality of disaster-sensing devices 10 is positioned within a range wirelessly communicable with the relay device 20. There will be a case in which the plurality of disaster-sensing devices 10 are also referred to as the disaster-sensing devices 10 (#1) to (#n) to identify individual ones. There will also be a case in which the disaster-sensing devices 10 are referred to as sensing devices 10 in an abbreviated manner.

The server device 30 is a so-called computer and includes, for example, a CPU (Central Processing Unit) 31, a memory 32, an input/output interface (I/F) 33, and a communication circuit 34, which are interconnected by a bus. To the memory 32, a RAM (Random Access Memory), a ROM (Read Only Memory), and a hard disk are applicable, but applicable components are not limited thereto. The communication circuit 34 performs communication with other computers and devices. To the communication circuit 34, a portable recording medium may be connected.

The input/output I/F 33 may be connected to a user interface device, such as a display device 35 and an input device 36. The display device 35 is a device, such as an LCD (Liquid Crystal Display) and a CRT (Cathode Ray Tube) display, that displays drawing data that are processed by the CPU 31 and/or a GPU (Graphics Processing Unit) (not illustrated). The input device 36 is a device, such as a keyboard and a mouse, that accepts user operation input. The display device 35 and the input device 36 may be combined into one body to be achieved as a touch panel.

The relay device 20 includes a CPU 21, a memory 22, a communication circuit 24, a wireless communication circuit 25, and an antenna 26. The wireless communication circuit 25 is a hardware component that includes a wireless circuit and performs wireless communication with at least one of the sensing devices 10 (#1) to (#n) by way of the antenna 26. The communication circuit 24 is a hardware component that performs communication with the server device 30 by way of a communication network 5. The communication network 5 may be a wired or wireless public telecommunication network or a private telecommunication network, such as a disaster prevention wireless network.

Each of the sensing devices 10 (#1) to (#n) includes an antenna 11, a plurality of sensors 12, a CPU 13, a memory 14, and a wireless communication circuit 15. The reference signs of the respective components of the sensing device 10 (#n) are omitted.

Each of the plurality of sensors 12 obtains one of a plurality of types of measurement data at the arrangement position thereof in time series form. The plurality of measurement data to be obtained are not limited to specific types of data as long as being information, such as light, sound, vibration, rainfall amount, airflow volume, soil moisture content, temperature, humidity, quantity of sunlight, inclination, and pressure, that may possibly take different values at and before the occurrence of a disaster from values at normal times. The number of sensors 12 is not limited to a specific number in the same manner.

The wireless communication circuit 15 is a hardware component that includes a wireless circuit and performs wireless communication with another sensing device or the relay device 20 by way of the antenna 11. The respective sensing devices 10 (#1) to (#n) may include the same configuration and are thus collectively referred to as the sensing devices 10 in the following description unless particularly required.

The hardware configurations of the server device 30, the relay device 20, and the sensing devices 10 are not limited to a specific configuration. The numbers of server devices 30, relay devices 20, and sensing devices 10 included in the system 1 are also not limited to specific numbers.

### [Processing configuration]

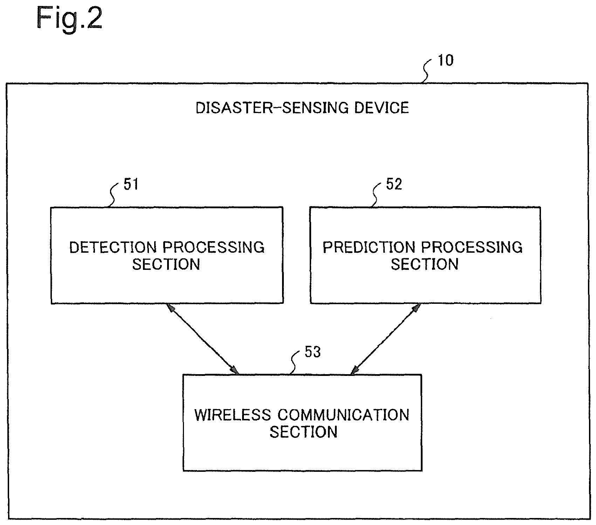

Fig. 2 is a diagram conceptually illustrating a processing configuration example of the disaster-sensing device 10 in the first exemplary embodiment. As illustrated in Fig. 2, the sensing device 10 includes a detection processing section 51, a prediction processing section 52, and a wireless communication section 53. The detection processing section 51, the prediction processing section 52, and the wireless communication section 53 are achieved by means of, for example, the CPU 13 executing programs stored in the memory 14. Such programs are stored in a portable recording medium, such as a CD (Compact Disc) and a memory card, and the like.

The detection processing section 51 processes at least one type of measurement data obtained by at least one of the plurality of sensors 12 and generates detection index data, which serve as an index of disaster occurrence detection. The detection index data are not measurement data themselves obtained by a sensor 12 but data into which the measurement data are processed. The detection index data may be any type of data as long as serving as an index of disaster occurrence detection. For example, the detection index data may be data indicating a result detection of a disaster occurrence, as described later.

The prediction processing section 52 processes the plurality of types of measurement data obtained by the plurality of sensors 12 in time series form and generates prediction index data, which serve as an index of disaster occurrence prediction. The prediction index data are not measurement data themselves obtained by the sensors 12 but data that are obtained by processing the measurement data. The prediction index data may be any type of data as long as serving as an index of disaster occurrence prediction. For example, the prediction index data may be data indicating a degree of risk of disaster occurrence, as described later.

The wireless communication section 53 makes the wireless communication circuit 15 transmit, from the antenna 11, a wireless signal indicating at least one of the detection index data generated by the detection processing section 51 and the prediction index data generated by the prediction processing section 52. The wireless signal transmitted from the antenna 11 includes, in addition to at least one of the detection index data and the prediction index data, identification information of each sensing device 10. Using the identification information, a sensing device 10 that is the transmission source of the detection index data or the prediction index data is recognized.

However, segregation of duties between the wireless communication section 53 and the wireless communication circuit 15 is not limited to a specific one. For example, the wireless communication section 53 may achieve the above-described processing by generating a bit string indicating the result of the detection and the prediction index data based on a predetermined signal format and passing the bit string to the wireless communication circuit 15. When generation of the above-described bit string is not required, the wireless communication section 53 does not have to be included.

The wireless communication section 53 may also make the wireless communication circuit 15 transmit a wireless signal indicating both the generated detection index data and the generated prediction index data. The wireless communication section 53 may also make the wireless communication circuit 15 transmit, in a wireless signal, representative data, among the generated detection index data, that satisfy a predetermined condition and make the wireless communication circuit 15 transmit, in a wireless signal, representative data, among the generated prediction index data, that satisfy a predetermined condition.

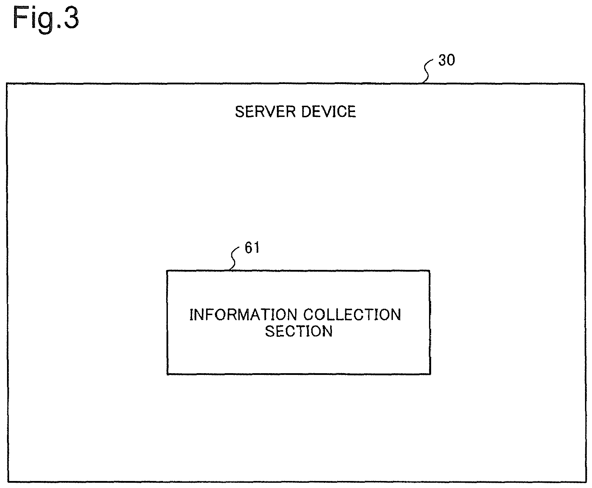

Fig. 3 is a diagram conceptually illustrating a processing configuration example of the server device 30 in the first exemplary embodiment.

As illustrated in Fig. 3, the server device 30 includes an information collection section 61. The information collection section 61 is achieved by means of, for example, the CPU 31 executing a program stored in the memory 32. Such a program is installed from a portable recording medium, such as a CD and a memory card, or another computer on the network by way of the input/output I/F 33 and stored in the memory 32.

The information collection section 61 receives detection index data at the arrangement position and prediction index data at the arrangement position of each sensing device 10, which are transmitted by each sensing device 10, from the relay device 20.

### [Operation example (disaster response method)]

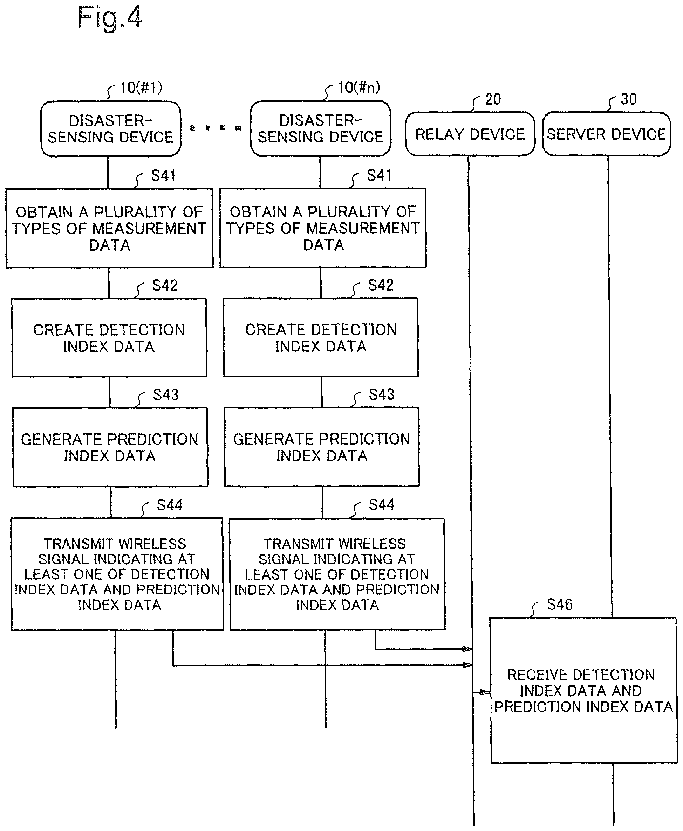

Hereinafter, a disaster response method in the first exemplary embodiment will be described using Fig. 4. Fig. 4 is a sequence chart illustrating an operation example of the system 1 in the first exemplary embodiment. Although the following description will be made regarding the respective sensing devices 10 and the server device 30 as execution subjects in the respective steps, the execution subject may be at least one device that composes the system 1.

Each sensing device 10 obtains each one of a plurality of types of measurement data at the arrangement position thereof in time series form (S41), and processes at least one type of measurement data among the plurality of types of measurement data obtained. Each sensing device 10 generates detection index data, which serve as an index of disaster occurrence detection (S42), processes the plurality of types of measurement data, which have been obtained in time series form, and generates prediction index data, which serve as an index of disaster occurrence prediction (S43). Subsequently, each sensing device 10 transmits a wireless signal that indicates at least one of the generated detection index data and the generated prediction index data (S44).

The server device 30 receives the detection index data at each arrangement position and the prediction index data at each arrangement position, which have been transmitted by each sensing device 10, from the relay device 20 (S46).

### [Effects and advantages in first exemplary embodiment]

As described above, in the first exemplary embodiment, the plurality of sensing devices 10 each of which has a plurality of sensors that are capable of obtaining a plurality of types of measurement data are arranged at predetermined positions individually, and, at each arrangement position, each of the plurality of types of measurement data are obtained successively. In each sensing device 10, through the processing of the obtained measurement data, detection index data, which serve as an index of disaster occurrence detection, are generated, and prediction index data, which serve as an index of disaster occurrence prediction, are generated. A wireless signal indicating at least one of the detection index data and the prediction index data is transmitted from each sensing device 10. The detection index data at each arrangement position and the prediction index data at each arrangement position, which are transmitted in this way, are received by the server device 30 by way of the relay device 20.

In other words, in the first exemplary embodiment, index data on detection and prediction of disaster occurrence are generated based on at least one type of measurement data obtained at the arrangement position of each sensing device 10. Therefore, detection index data and prediction index data that reflect characteristics at each position (positional condition) can be generated. According to the first exemplary embodiment, performing detection and prediction of disaster occurrence using the detection index data and the prediction index data enables the accuracy of the detection and prediction to be improved, compared with a method that does not take into account any positional condition (soil condition and the like). Furthermore, since, in the first exemplary embodiment, index data on detection and prediction of disaster occurrence are generated with respect to each sensing device 10, that is, at each different position, prediction index data and detection index data of disaster occurrence with respect to a plurality of positions can be collected in the server device 30.

Furthermore, since, in the first exemplary embodiment, detection index data and prediction index data that are obtained through processing of measurement data, instead of measurement data themselves, are collected in the server device 30, a load on detection processing and prediction processing of disaster occurrence performed in the server device 30 can be reduced.

To achieve such advantageous effects, the plurality of sensing devices 10 may be arranged at desired positions. In this case, compared with a method of generating a positional condition model (soil condition and the like) in advance, a system installation (initial operation) cost can be reduced, which enables the extent of installation of the system 1 to be enlarged easily.

In the first exemplary embodiment, each sensing device 10 performs wireless communication with at least one of the other sensing devices 10. Each sensing device 10 performs wireless communication with the relay device 20 directly or by way of another sensing device 10 depending on the arrangement position of the sensing device 10. Detection index data and prediction index data obtained by each sensing device 10 are delivered to the server device 30 by way of the relay device 20. Since the first exemplary embodiment does not thus require connections by wired communication lines and the like between the sensing devices 10 and between the sensing devices 10 and the relay device 20, a system installation cost can be reduced.

Furthermore, since, in first exemplary embodiment, each sensing device 10 transmits detection index data and prediction index data, transmitting a plurality of types of measurement data themselves successively is not always required. Thus, avoiding transmitting measurement data themselves successively enables the volume of communication transmitted from the sensing device 10 to be reduced, which enables electric power consumption required for wireless communication performed by the respective sensing devices 10 and the relay device 20 to be reduced. In addition, the volume of communication between the relay device 20 and the server device 30 can also be reduced.

Hereinafter, the above-described first exemplary embodiment will be described in more detail. As detailed exemplary embodiments, a second exemplary embodiment and a third exemplary embodiment will be described in an exemplifying manner below.

### [Second Exemplary Embodiment]

Hereinafter, a disaster response system 1 in the second exemplary embodiment will be described with a focus on different features from the first exemplary embodiment. In the following description, a description of the same features as those of the first exemplary embodiment will be omitted appropriately.

A system configuration and a hardware configuration of the system 1 in the second exemplary embodiment are the same as the first exemplary embodiment. However, each sensing device 10 in the second exemplary embodiment is capable of operating for a long time due to power saving control, which will be described later, even when using a primary battery or a secondary battery as a main power source, and, thus, wiring with a commercial power source can be eliminated.

A plurality of sensing devices 10 included in the system 1 in the second exemplary embodiment form at least one multi-hop wireless network. On the basis of a maximum hop count and the like allowed in the multi-hop wireless network, the number and arrangement of relay devices 20 are determined. In the multi-hop wireless network, a wireless communication circuit 15 of a sensing device 10 that serves as a relay station wirelessly relays detection index data and prediction index data wirelessly transmitted from another disaster-sensing device 10 to the relay device 20 or still another disaster-sensing device 10 (a sensing device 10 at a higher level). However, the relay processing may be achieved by the wireless communication circuit 15 or by means of collaboration between the wireless communication circuit 15 and a wireless communication section 53. The wireless communication circuit 15 and the wireless communication section 53 may demodulate and modulate a signal received from another disaster-sensing device 10 and generate a new signal or relay the signal without performing demodulation and modulation.

### [Processing configuration]

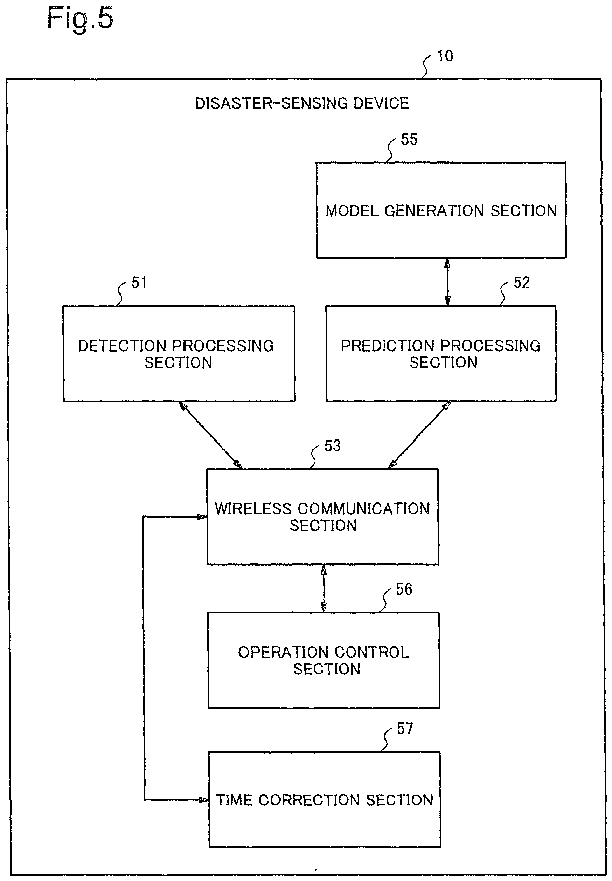

Fig. 5 is a diagram conceptually illustrating a processing configuration example of the sensing device 10 in the second exemplary embodiment. As illustrated in Fig. 5, the sensing device 10 in the second exemplary embodiment further includes a model generation section 55, an operation control section 56, and a time correction section 57, in addition to the configuration of the first exemplary embodiment.

The model generation section 55, the operation control section 56, and the time correction section 57 are also achieved by means of a CPU (not illustrated) executing programs stored in a memory (not illustrated).

The model generation section 55 generates a relationship model on a plurality of types of measurement data based on the plurality of types of measurement data obtained by a plurality of sensors 12 in time series form. For example, the model generation section 55 may generate, as the above-described relationship model, a regression equation that has one of the plurality of types of measurement data as a criterion variable and the other types of measurement data as explanatory variables. A plurality of relationship models may be generated. In this case, the model generation section 55 may generate a plurality of regression equations that have one of the plurality of types of measurement data as a criterion variable and each of which has one out of the other types of measurement data as an explanatory variable. Any known method can be used for the generation of the relationship model.

When temporal waveform data, such as light, sound, and vibration, are included in the plurality of types of measurement data, the model generation section 55 may use, as a variable in the relationship model, frequency time series data, which are obtained by applying frequency transformation to the temporal waveform data and sorting feature amounts of frequency component data obtained from the transformation in time series form.

The model generation section 55 may also calculate a natural frequency (also referred to as a dominant frequency) of soil in a predetermined region based on the temporal waveform data and use the natural frequency as a variable in the relationship model.

It is preferable to generate the relationship model by combining ones among the plurality of types of measurement data that have a strong correlation therebetween.

The prediction processing section 52 processes the plurality of types of measurement data obtained by the plurality of sensors 12 using the relationship model generated by the model generation section 55 and generates prediction index data. The relationship model generated by the model generation section 55 represents correlations among the plurality of types of measurement data, which were obtained at normal times when no disaster had occurred. The prediction processing section 52 generates prediction index data of disaster occurrence in accordance with fluctuations in the correlations that the relationship model represents. For example, the prediction processing section 52 may substitute latest measurement data obtained by the sensors 12 into the relationship model to calculate at least one piece of prediction data and determine a difference between the piece of prediction data and the latest measurement data obtained by a sensor 12 to be prediction index data.

The wireless communication section 53 extracts instructions individually from a plurality of instruction signals from the server device 30, which have been received successively by the wireless communication circuit 15. The instructions are used by the operation control section 56, which will be described later.

The wireless communication section 53 further receives common time information. For example, the wireless communication circuit 15 includes a GPS (Global Positioning System) receiver and time information received by the GPS receiver is received by the wireless communication section 53 as the common time information. For the GPS, for example, a quasi-zenith satellite system is used to obtain highly accurate common time information. The common time information may, however, be received from the server device 30 by means of a wireless signal. The received common time information is used by the time correction section 57, which will be described later.

The operation control section 56 performs power saving control. In each sensing device 10, the operation of hardware components, such as the sensor 12, the CPU 13, and the wireless communication circuit 15, consumes electric power. On the other hand, to achieve the processing as described above, the respective hardware components are required to be operated. Thus, the exemplary embodiment provides each sensing device 10 with a plurality of operation modes and switches the plurality of operation modes appropriately to achieve power saving.

Specifically, the operation control section 56 switches a plurality of operation modes including a first operation mode, a second operation mode, and a third operation mode, based on the plurality of instruction signals received by the wireless communication section 53. As used herein, switching operation modes means to control the operations of hardware components and software components included in a sensing device 10 so that the hardware components and software components are brought into a state in which an operation mode after switching is operated.

The first operation mode is an operation mode in which the plurality of sensors 12 are put in an inoperable state and the wireless communication circuit 15 is switched between an operable state and an inoperable state cyclically.

The second operation mode is an operation mode in which the plurality of sensors 12 are put in the inoperable state and the wireless communication circuit 15 is put in a continuously operable state.

The third operation mode is an operation mode in which the plurality of sensors 12 and the wireless communication circuit 15 are put in operable states.

As used herein, the wireless communication circuit 15 being in the operable state means being in a state in which the wireless communication circuit 15 is able to receive or transmit a wireless signal. The wireless communication circuit 15 being in the inoperable state means being in a state in which the wireless communication circuit 15 is neither able to receive nor transmit a wireless signal. The sensor 12 being in the operable state means being in a state in which the sensor 12 is able to obtain measurement data, and the sensor 12 being in the inoperable state means being in a state in which the sensor 12 is unable to obtain measurement data. Thus, to bring the sensors 12 and the wireless communication circuit 15 into the inoperable states, power supply thereto may be shut off completely or smaller power than when in the operable states may be supplied. The plurality of operation modes to be switched may be three operation modes, namely the first operation mode, the second operation mode, and the third operation mode, or four or more operation modes including another operation mode.

Among the above-described three operation modes, an operation mode in which the largest power is consumed is the third operation mode, an operation mode except the third operation mode in which the largest power is consumed is the second operation mode, and an operation mode in which the least power is consumed is the first operation mode. In the first operation mode, shortening a time during which the wireless communication circuit 15 is in the operable state and lengthening a time during which the wireless communication circuit 15 is in the inoperable state enable the power consumption to be further reduced. For example, the wireless communication circuit 15 is put in the operable state for 30 seconds every 10 minutes, and, in other times, put in the inoperable state. The respective times, in the first operation mode as described above, during which the wireless communication circuit 15 is in the inoperable state and in the operable state are determined in advance in accordance with characteristics and the like of a target disaster. In the first and second operation modes, the plurality of sensors 12 are put in the inoperable state and, thus, the detection processing section 51, the prediction processing section 52, and the model generation section 55 do not perform processing. Therefore, in the first and second operation modes, power consumption by the CPU 13 can also be reduced.

The operation control section 56 is also capable of performing control that puts a priority on either power saving or the relationship model. For example, the operation control section 56 performs control so that the operation time in the first operation mode, of the plurality of operation modes, becomes longest. Since such control causes the time during which each sensing device 10 operates in the first operation mode, in which the least power is consumed, to become longest, power consumption by each sensing device 10 can be reduced. However, to increase the accuracy of the relationship model generated by the model generation section 55, the operation control section 56 may perform control in such a way as to force a sensing device 10 to be operated in the third operation mode for a predetermined period after the sensing device 10 is installed (a predetermined period after being activated), regardless of instruction signals. In this case, the operation control section 56 may also cause the third operation mode to transition to the first operation mode in a forcible manner based on the evaluation of the accuracy of the relationship model. The accuracy of the relationship model can be evaluated based on, for example, a difference between prediction data calculated using the relationship model and measurement data.

The operation control section 56 may also perform alive monitoring of the sensors 12 in the first and second operation modes, in which the sensors 12 are put in the inoperable state. Such a configuration enables prevention of such a situation that the sensors 12 cannot be brought into the operable state due to a malfunction therein when it becomes required to bring the sensors 12 into the operable state.

On the other hand, the first operation mode is not an operation mode in which the wireless communication circuit 15 is in the continuously operable state. That is, each sensing device 10 is not in a state of being continuously able to receive an instruction signal from the server device 30. When the server device 30 needs to make each sensing device 10 switch the operation mode thereof from the first operation mode to another operation mode, the server device 30 may transmit instruction signals for the switch in a repetitive manner until the sensing device 10 has received the signals. However, this method is not preferable because the method causes useless instruction signals to be transmitted. Thus, it is preferable that the server device 30 grasp a period of time for which the wireless communication circuit 15 of each sensing device 10 operating in the first operation mode is put in the operable state and transmit the instruction signal in the grasped period of time.

For this purpose, it is preferable that the respective sensing devices 10 and the server device 30 share common time.

Therefore, the time correction section 57 corrects the time of an internal clock based on common time information received by the wireless communication section 53. In particular, when operating in the first operation mode, the time correction section 57 corrects the time of the internal clock based on common time information received by the wireless communication circuit 15 (or the wireless communication section 53), which is brought into the operable state cyclically.

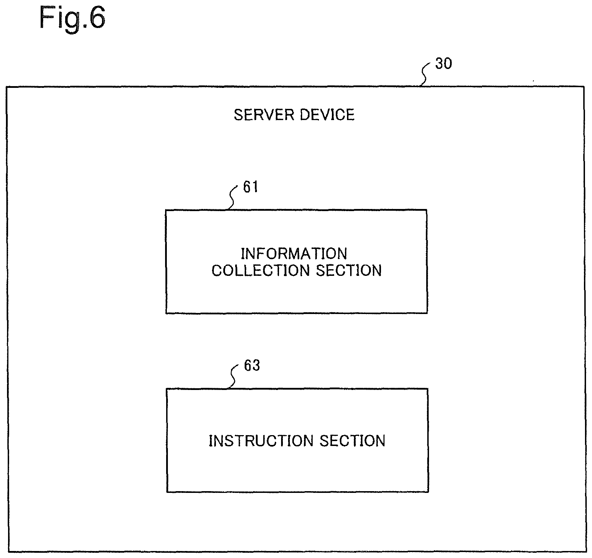

Fig. 6 is a diagram conceptually illustrating a processing configuration example of the server device 30 in the second exemplary embodiment.

As illustrated in Fig. 6, the server device 30 in the second exemplary embodiment further includes an instruction section 63 in addition to the configuration of the first exemplary embodiment. The instruction section 63 is achieved by means of a CPU (not illustrated) executing a program stored in a memory (not illustrated).

The instruction section 63 causes a plurality of instruction signals to be wirelessly transmitted successively to the plurality of sensing devices 10 by way of the relay device 20 in such a way that the operation time during which each sensing device 10 operates in the first operation mode, of the plurality of operation modes, becomes longest. The plurality of instruction signals include an instruction signal for switching from the first operation mode to the second operation mode, an instruction signal for switching from the second operation mode to the third operation mode, and an instruction signal for switching from the third operation mode to the first operation mode. The instruction section 63 may, by transmitting instruction data to the relay device 20, make the relay device 20 wirelessly transmit an instruction signal corresponding to the instruction data.

In particular, when the instruction section 63 transmits an instruction signal for causing the first operation mode to be switched to another operation mode among the plurality of instruction signals, the instruction section 63 transmits the instruction signal by matching the timing of the transmission with the timing when the wireless communication circuit 15 of each sensing device 10 operating in the first operation mode is brought into the operable state cyclically. The transmission timing may be determined based on the time of the internal clock of the server device 30 or determined using a dedicated timer, which has been activated separately.

The instruction section 63 may perform transmission control of instruction signals so that each sensing device 10 operates in the third operation mode for a predetermined period after the sensing device 10 is installed to increase the accuracy of the relationship model generated by the model generation section 55.

### [Operation example (disaster response method)]

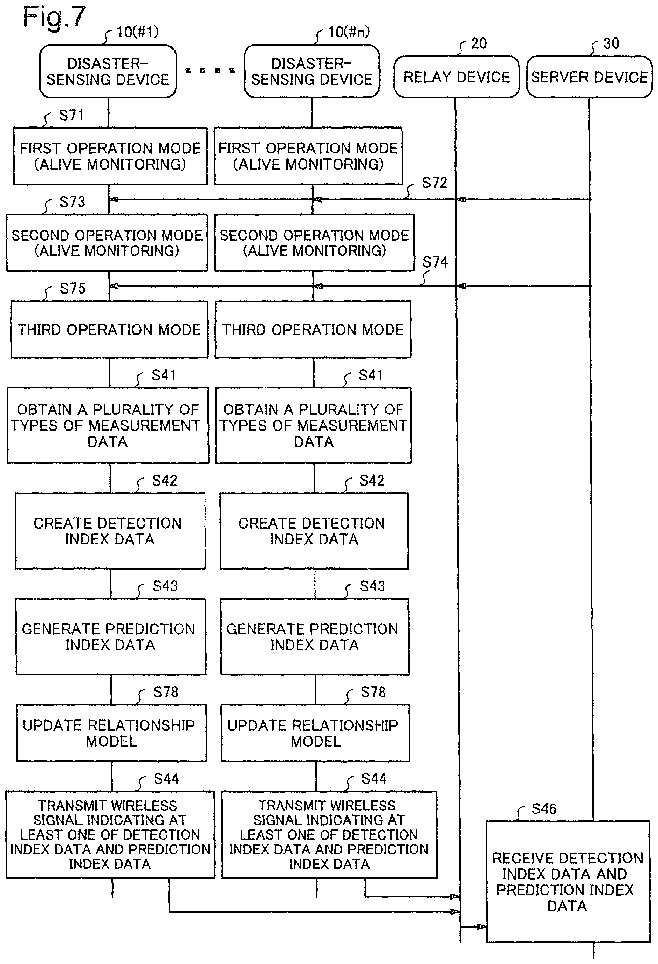

Hereinafter, a disaster response method in the second exemplary embodiment will be described using Fig. 7. Fig. 7 is a sequence chart illustrating an operation example of the system 1 in the second exemplary embodiment. Although the following description will be made regarding the respective sensing devices 10 and the server device 30 as execution subjects in the respective steps, the execution subject may be at least one device that composes the system 1. In Fig. 7, the same signs as in Fig. 4 are assigned to the steps in which the same processing as those of the first exemplary embodiment is performed.

Each sensing device 10 is operating in the first operation mode (S71). In the first operation mode, the plurality of sensors 12 are put in the inoperable state, and the wireless communication circuit 15 is switched between the operable state and the inoperable state cyclically. Further, since the plurality of sensors 12 being in the inoperable state causes measurement data not to be obtained, generation processing of detection index data, generation processing of prediction index data, and update processing of the relationship model are not performed and, thus, a load on the CPU 13 is low. At this time, it is preferable that each sensing device 10 perform the alive monitoring of each of the sensors 12.

When the probability of disaster occurrence becomes a little higher than in normal times, the server device 30 makes the relay device 20 wirelessly transmit an instruction signal for causing each sensing device 10 to transition to the second operation mode (S72). The transmission timing of the instruction signal is matched with timing when the wireless communication circuit 15 of each sensing device 10 is in the operable state that occurs cyclically.

When each sensing device 10 has received the instruction signal at a timing when the wireless communication circuit 15 is in the operable state, the sensing device 10 transitions from the first operation mode to the second operation mode (S73). Specifically, each sensing device 10 brings the wireless communication circuit 15 into the continuously operable state. At this time, the respective sensors 12 are kept in the inoperable state. This processing causes each sensing device 10 to become ready for receiving an instruction signal at any time. It is preferable that each sensing device 10 also perform the alive monitoring of each of the sensors 12 when the sensing device 10 is operating in the second operation mode.

When the probability of disaster occurrence further increases, the server device 30 makes the relay device 20 wirelessly transmit an instruction signal for causing each sensing device 10 to transition to the third operation mode (S74). The transmission timing of the instruction signal may be set to any timing.

When receiving the instruction signal, each sensing device 10 transitions from the second operation mode to the third operation mode (S75). Specifically, each sensing device 10 brings each sensor 12 into the operable state. This processing causes the wireless communication circuit 15 and each sensor 12 to be brought into the operable states, and each sensing device 10 performs steps S41 to S44, as described in the first exemplary embodiment. At this time, each sensing device 10 may also update the relationship model based on the plurality of types of measurement data, which are obtained in time series form in step S41 (S78). The execution timing of the update of the relationship model (S78) may, however, be set to an arbitrarily timing as long as when no disaster occurrence has been detected and step S41 is being performed. When the accuracy of the relationship model is determined to be high, the update of the relationship model does not have to be performed.

The server device 30 performs step S46 as described in the first exemplary embodiment.

Subsequently, when it is determined that normal times have returned, the server device 30 makes the relay device 20 wirelessly transmit an instruction signal to cause transition from the third operation mode to the first operation mode (not illustrated). Each sensing device 10 corrects the time of the internal clock, at any timing, based on the common time information received by the wireless communication circuit 15, which is in the operable state (not illustrated).

### [Effects and advantages in second exemplary embodiment]

As described above, in the second exemplary embodiment, a plurality of operation modes including the first operation mode, the second operation mode, and the third operation mode are provided to each sensing device 10, and the operation mode is switched so that each sensing device 10 operates in the first operation mode, in which power consumption is lowest, for the longest time. In the first operation mode, since the respective sensors 12 are put in an inoperable state, the wireless communication circuit 15 is halted cyclically, and the generation processing of detection index data and the generation processing of prediction index data are not performed, only a little power is consumed.

Therefore, the second exemplary embodiment enables each sensing device 10 to operate for a long time even when the sensing device 10 uses a primary battery or a secondary battery as the main power source and thus enables wiring with a commercial power source to be eliminated. Accordingly, the second exemplary embodiment enables an installation cost and operation cost for the system 1 to be reduced.

The plurality of operation modes that are provided to each sensing device 10 as described above have different technological significance from operation modes provided to general devices and the like for power saving purpose. Hereinafter, the technological significance of the plurality of operation modes and switching processing among the operation modes will be described.

First, the present inventors have focused on existence of disasters, occurrence factors of which are limited. For example, a large portion of natural disasters occur caused by specific natural phenomena. Among other disasters, there are also disasters that occur caused by specific natural phenomena and specific events. The sensing device 10 that detects and predicts occurrences of such disasters is not required to be operated at a constant cycle, such as once every day and once every several hours, and may be operated in a concentrated manner when the specific natural phenomena or events are occurring. Thus, the present inventors have obtained an idea that configuring operation in the third operation mode, in which index data of the detection and prediction of disaster occurrence are generated, to be performed in limited periods of time and operation in another operation mode, in which minimal processing is available, to be performed in the other periods enables the power consumption of each sensing device 10 to be reduced. Further, the present inventors have found the first operation mode as described above as an operation mode, other than the third operation mode, to suppress power consumption at a sensing device 10 to a required minimum. However, in the first operation mode, since time intervals for which instruction signals can be received are limited, there is a possibility that transition to the third operation mode is delayed, resulting in delaying the detection and prediction of disaster occurrence. Thus, the present inventors have found the second operation mode as described above that, as an operation mode in which operation is performed between operation in the first operation mode and operation in the third operation mode, enables a fast transition to the third operation mode. Using the first operation mode in normal times causes operation in the first operation mode, in which power consumption is lowest, to be performed for the longest time, which results in enabling power consumption at each sensing device 10 to be reduced. On the other hand, transitioning the operation mode from the first operation mode to the second operation mode to, finally, the third operation mode as the probability of disaster occurrence increases enables the detection and prediction of disaster occurrence to be performed accurately and speedily.

In the second exemplary embodiment, the plurality of sensing devices 10 included in the system 1 form at least one multi-hop wireless network. Thus, detection index data and prediction index data transmitted from a sensing device 10 may be delivered to the relay device 20 by way of other sensing devices 10. Therefore, the second exemplary embodiment enables the number of relay devices 20 in the system 1 to be reduced.

In the second exemplary embodiment, a relationship model on a plurality of types of measurement data is generated in each sensing device 10, and prediction index data is generated in accordance with the relationship model. Since the relationship model is a model that represents relations among the plurality of types of measurement data based on measurement data obtained at the arrangement position of each sensing device 10, it is possible to generate highly accurate prediction index data at each arrangement position.

### [Third Exemplary Embodiment]

Each sensing device 10 is arranged in a scattered manner at a wirelessly communicable distance with another sensing device 10 or a relay device 20. There is a possibility that each sensing device 10 is arranged at a hardly visible position, such as under the ground and in a shadow. For example, at least a portion of a sensing device 10 is sometimes buried in the ground. In this case, each sensing device 10 is buried in such a way that only portions of an antenna 11 and sensors 12 are exposed above the ground and the other portions are placed in the ground. There may be a case in which the whole of a sensing device 10 is completely buried under the ground. There may also be a case in which at least a portion of a sensing device 10 is contained in a box. As described above, a sensing device 10 being buried under the ground or contained in a box enables the sensing device 10 to be easily protected against influence from phenomena in the outside world, such as wind, snow, rain, thunder, and heat.

On the other hand, when each sensing device 10 uses a primary battery or a secondary battery as a main power source as described in the second exemplary embodiment, it becomes required to replace or charge those batteries. However, when the sensing devices 10 are arranged in a large area or at hardly visible positions, it is difficult for workers to grasp the positions of the sensing devices 10 in carrying out such maintenance work.

Hereinafter, a disaster response system 1 in the third exemplary embodiment will be described with a focus on different features from the first and second exemplary embodiments. In the following description, a description of the same features as those of the first and second exemplary embodiments will be omitted appropriately.

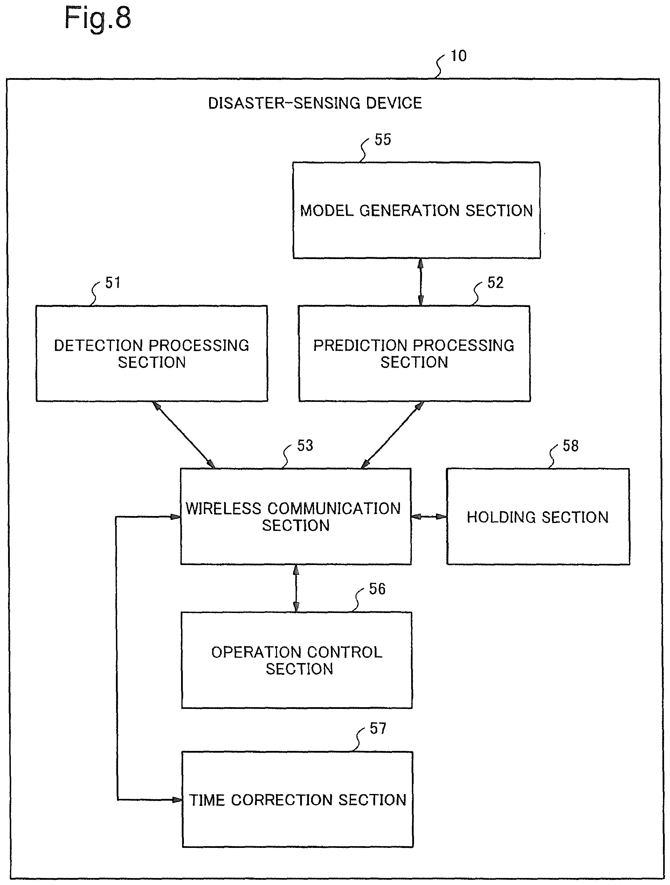

Fig. 8 is a diagram conceptually illustrating a processing configuration example of the sensing device 10 in the third exemplary embodiment. As illustrated in Fig. 8, each sensing device 10 in the third exemplary embodiment further includes a holding section 58 in addition to the configuration of the second exemplary embodiment. The holding section 58 is achieved by means of a CPU (not illustrated) executing a program stored in a memory (not illustrated).

The holding section 58 holds a sensing device's 10 own position information. For example, a wireless communication circuit 15 has a GPS (Global Positioning System) receiver, and position information received by the GPS receiver is held in the holding section 58 as the above-described position information. To obtain highly accurate common time information, for example, a quasi-zenith satellite system is used for the GPS. The position information may, however, be manually set when the sensing device 10 is installed.

A wireless communication section 53 transmits a wireless signal indicating the sensing device's 10 own position information, which is held in the holding section 58, in collaboration with the wireless communication circuit 15.

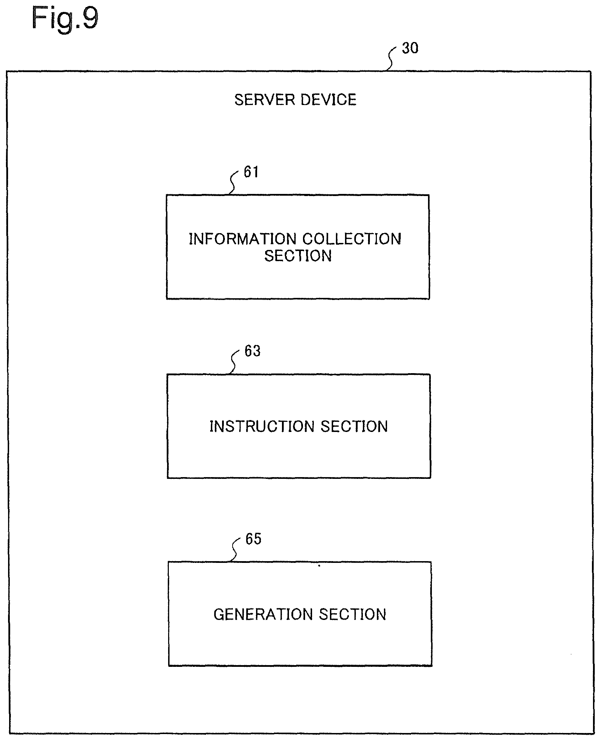

Fig. 9 is a diagram conceptually illustrating a processing configuration example of a server device 30 in the third exemplary embodiment.

As illustrated in Fig. 9, the server device 30 in the third exemplary embodiment further includes a generation section 65 in addition to the configuration of the second exemplary embodiment. The generation section 65 is achieved by means of a CPU (not illustrated) executing a program stored in a memory (not illustrated).

An information collection section 61 further receives position information of each of a plurality of sensing devices 10, which has been transmitted from the sensing device 10, from the relay device 20.

The generation section 65 generates pieces of screen data that individually represent the positions of the respective sensing devices 10 using the position information of the sensing devices 10 received by the information collection section 61. Based on the screen data generated by the generation section 65, a screen individually showing the positions of the respective sensing devices 10 is displayed on a display device 35. The screen data can be printed by a printing device (not illustrated) as images that individually show the positions of the respective sensing devices 10. The screen data may also be provided to a client terminal that can access the server device 30.

In this case, a maintenance worker accesses the server device 30 with a mobile terminal to display the screen on the mobile terminal. This configuration enables the maintenance worker to grasp the position of each sensing device 10 easily while comparing the position of the mobile terminal itself with the position of the sensing device 10.

### [Operation example (disaster response method)]

A disaster response method in the third exemplary embodiment, as described above, further includes a step of the respective sensing devices 10 wirelessly transmitting position information and a step of the server device 30 receiving the position information of the respective sensing devices 10 and generating screen data that individually show the positions of the respective sensing devices 10. These steps can be performed at any timing in an asynchronous manner from the respective steps in the above-described first and second exemplary embodiments.

### [Effects and advantages in third exemplary embodiment]

As described above, in the third exemplary embodiment, each sensing device 10 holds the position information of its own, and the position information of the sensing device 10 is wirelessly transmitted. In the server device 30, pieces of screen data each of which represents the position of each sensing device 10 are generated based on the received position information. Therefore, according to the third exemplary embodiment, even when the respective sensing devices 10 are installed at hardly visible positions in a large area, a maintenance worker, referring to an output based on the screen data, is able to grasp the positions of the respective sensing devices 10 easily.

### [Additional Notes]

A relay device 20 relays information transmitted from a server device 30 to respective sensing devices 10 and relays information transmitted from the respective sensing devices 10 to the server device 30. Details of such relaying processing is not particularly limited. For example, when receiving a wireless signal from each sensing device 10, the relay device 20 demodulates the received signal to extract individual information (detection index data and prediction index data, position information, and the like), which has been transmitted from the sensing device 10, together with the identification information of the sensing device 10, which is a transmission source. The relay device 20 transmits the extracted individual information and identification information to the server device 30. At this time, the relay device 20 holds the individual information and the identification information in association with each other, and, in response to a request from the server device 30, transmits the held individual information and identification information to the server device 30. The relay device 20 may also transmits the extracted individual information and identification information to the server device 30 autonomously without holding such information. Conversely, when receiving information (an instruction of an operation mode and the like) transmitted from the server device 30, the relay device 20 transmits a wireless signal corresponding to the information so that each sensing device 10 receives the signal. When all the sensing devices 10 are wirelessly communicable with the relay device 20, for example, the relay device 20 may transmit a multicast wireless signal. When a multi-hop wireless network, which is linked to the relay device 20, is formed, the relay device 20 transmits a wireless signal addressed to a target sensing device 10, and the target sensing device 10 relays the wireless signal to lower-level nodes. Relaying processing by the relay device 20 is not limited to only such processing.

In addition, the server device 30 may be configured to make a final decision on prediction and detection of disaster occurrence using detection index data and prediction index data collected by an information collection section 61 from the respective sensing devices 10.

### [Variation]

A detection processing section 51 may be configured to detect a disaster occurrence based on data that are obtained by processing at least one type of measurement data. For example, the detection processing section 51 is able to detect a disaster occurrence by holding a predetermined threshold value for disaster occurrence detection and comparing the data with the predetermined threshold value. In this case, the detection processing section 51 is able to generate detection index data that indicates the result of the detection. Further, the detection processing section 51 may generate a result of a detection and data that have served as evidence of the detection as detection index data.

A prediction processing section 52 may be configured to determine a degree of risk of disaster occurrence based on data that are obtained by processing a plurality of types of measurement data. For example, the prediction processing section 52 is able to determine a degree of risk of disaster occurrence by holding a predetermined threshold value for measuring signs of disaster occurrence and comparing the data with the predetermined threshold value. The degree of risk may be indicated by a binary value of whether or not being in danger or a ternary or greater value representing a degree of danger. In this case, the prediction processing section 52 is capable of generating prediction index data that indicates the degree of risk. The prediction processing section 52 may generate a degree of risk and data that have served as evidence in determining the degree of risk as prediction index data.

When the detection processing section 51 performs the detection of disaster occurrence, the detection processing section 51 may detect a disaster occurrence using not only measurement data obtained by sensors 12 of a sensing device 10 that includes the detection processing section 51 but also measurement data or detection index data obtained from another sensing device 10.

In this case, all the sensing devices 10 may be categorized into either a device(s) that perform(s) the detection of disaster occurrence or a device(s) that do(es) not. When the prediction processing section 52 determines a degree of risk of disaster occurrence, measurement data obtained by sensors 12 of a sensing device 10 that includes the prediction processing section 52 are not the only data that the prediction processing section 52 may use. The prediction processing section 52 may also determine a degree of risk of disaster occurrence using measurement data or prediction index data transmitted from another sensing device 10. In this case, all the sensing devices 10 may be categorized into either a device(s) that determine(s) a degree of risk of disaster occurrence or a device(s) that do(es) not.

Hereinafter, the above-described exemplary embodiments will be described in more detail.

The instruction section 63 of the server device 30 may perform transmission of a plurality of instruction signals for causing the operation mode of each sensing device 10 to be transitioned in the following manner.

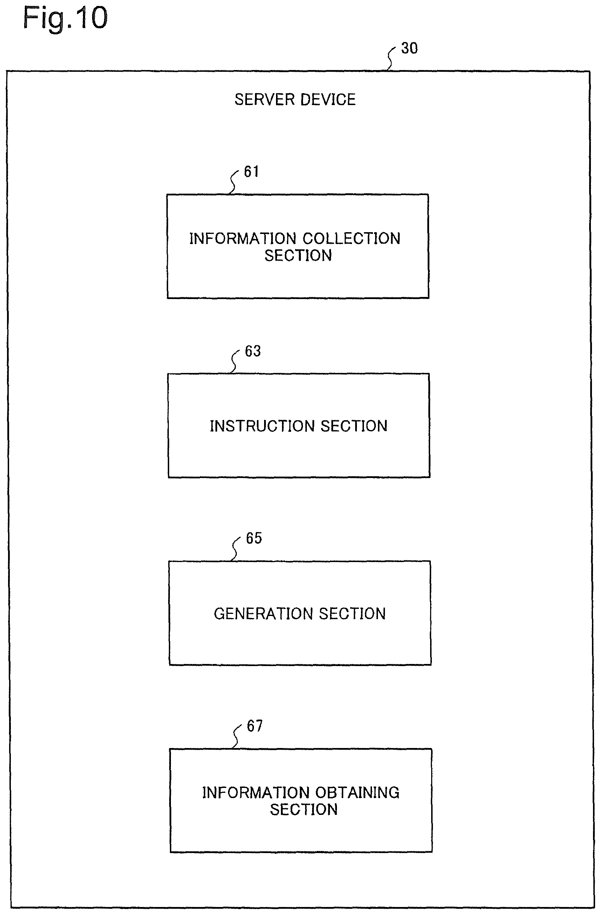

Fig. 10 is a diagram conceptually illustrating a processing configuration example of the server device 30. As illustrated in Fig. 10, the server device 30 further includes an information obtaining section 67.

The information obtaining section 67 is also achieved by means of a CPU (not illustrated) executing a program stored in a memory (not illustrated).

The information obtaining section 67 obtains two predetermined types of issuance information among weather warning issuance information and disaster alert issuance information, which are transmitted from public institutions, and two predetermined types of cancellation information among weather warning cancellation information and disaster alert cancellation information, which are transmitted from the public institution. For example, the weather warning issuance information is exemplified by warnings, advisories, and emergency warnings that are issued by meteorological observatories and local public bodies. The warnings include a heavy rain warning, a flood warning, a heavy snow warning, a storm warning, and the like, and the advisories include a heavy rain advisory, a gale advisory, a high-waves advisory, and the like. The disaster alert issuance information includes landslide alert information. The weather warning cancellation information and the disaster alert cancellation information include cancellation information corresponding to the above-described issuance information.

Upon obtaining the above-described respective issuance information and the above-described respective cancellation information, the instruction section 63 causes the relay device 20 to wirelessly transmit a first instruction signal and a second instruction signal corresponding to the issuance information and a third instruction signal corresponding to the cancellation information to each sensing device 10 successively. It is preferable that transmission of the second instruction signal be made when issuance information having a higher degree of risk than that of the first instruction signal is obtained. It is preferable that transmission of the third instruction signal be made when cancellation information corresponding to all issuance information that was used for transmission determination of the first instruction signal and the second instruction signal is obtained.

With this configuration, the operation control section 56 of each sensing device 10, upon receiving the first instruction signal, switches the operation mode from the first operation mode to the second operation mode, upon receiving the second instruction signal, switches the operation mode from the second operation mode to the third operation mode, and, upon receiving the third instruction signal, switches the operation mode from the third operation mode to the first operation mode.

In this way, weather information and disaster information, which are transmitted from responsible public institutions, are used as a determination condition of whether to transmit an instruction signal for each sensing device 10 to transition to an operation mode. This configuration enables detection index data and prediction index data to be surely generated when needed, which eventually enables detection and prediction of disaster occurrence to be made.

Specific examples of the disaster that is targeted by the above-described system 1 include a landslide disaster.

In this specific example, the plurality of sensors 12 of each sensing device 10 obtain at least one of a rainfall amount and a soil moisture content and vibration data as the above-described plurality of types of measurement data. The detection processing section 51 applies frequency analysis to vibration data obtained by one of the plurality of sensors 12 and, based on component data (power) in a predetermined frequency band obtained by the frequency analysis, generates detection index data. The prediction processing section 52 applies frequency analysis to the vibration data and, based on frequency component data obtained by the frequency analysis and at least one of the rainfall amount and the soil moisture content, generates prediction index data.

It has been known that, when a landslide disaster occurs, power surpassing a predetermined level appears in a specific frequency band of vibration data. Thus, the detection processing section 51 performs frequency transformation on the obtained vibration data and holds the transformed component data in the specific frequency band successively. The successively-held component data in the specific frequency band may be treated as detection index data. The detection processing section 51 may also hold only component data that indicates the largest power as detection index data. Further, the detection processing section 51 may detect that a landslide disaster has occurred depending on whether the calculated power in the specific frequency band surpasses a predetermined level. In this case, the detection processing section 51 may treat the result of the detection as detection index data.

It is also known that the natural frequency of soil has a correlation with the soil moisture content and the rainfall amount. Thus, the prediction processing section 52 may calculate, as prediction index data, data indicating a degree of breakdown in the correlation between the natural frequency of soil, obtained from vibration data, and the soil moisture content and the correlation between the natural frequency of soil and the rainfall amount. The prediction processing section 52 may also calculate a degree of excess over a predetermined threshold value at the degree of breakdown and consider the degree of excess as a degree of risk of disaster occurrence. In this case, the prediction processing section 52 may treat the degree of risk as prediction index data.

In the specific example, for example, triggered by issuance of a heavy rain warning, issuance of a landslide alert information, cancellation of the heavy rain warning, or cancellation of the landslide alert information, which are announced by meteorological observatories and local public bodies, the operation mode of each sensing device 10 is switched.

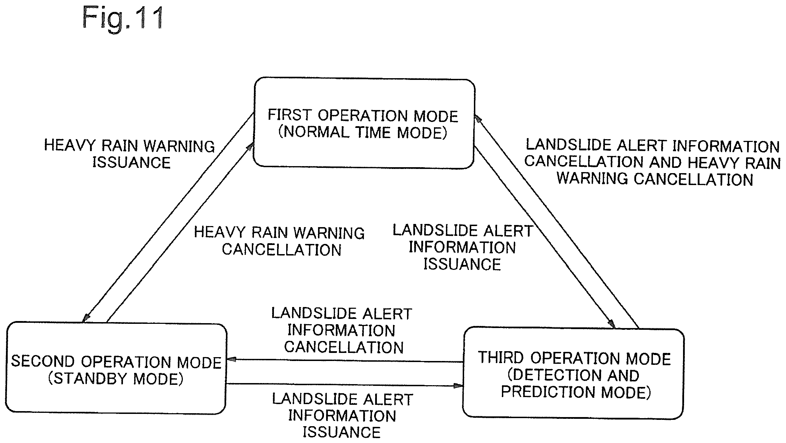

Fig. 11 is a diagram conceptually illustrating a specific example of transitions among operation modes. In the example in Fig. 11, when neither heavy rain warning nor landslide alert information has been issued, a sensing device 10 operates in the first operation mode. When a heavy rain warning is issued, the sensing device 10 transitions from the first operation mode to the second operation mode. Subsequently, when a landslide alert information is issued, the sensing device 10 transitions from the second operation mode to the third operation mode. When the landslide alert information and the heavy rain warning are cancelled approximately at the same time, the sensing device 10 transitions from the third operation mode to the first operation mode. When the heavy rain warning is cancelled without issuance of a landslide alert information after issuance of the heavy rain warning, the sensing device 10 is caused to transition from the second operation mode to the first operation mode. In a similar manner, when only the landslide alert information is cancelled after issuance of the heavy rain warning and the landslide alert information, the sensing device 10 transitions from the third operation mode to the second operation mode.

Although a plurality of steps (processes) are described in order in a plurality of sequence charts used in the above description, the execution sequence of steps executed in each exemplary embodiment is not limited to the sequence of description of the steps. In each exemplary embodiment, the illustrated sequence of steps can be altered within a range not affecting operations in the steps. The above-described exemplary embodiments can be combined in any manner within a range not conflicting with one another.

All or part of the exemplary embodiments described above may be described as in the following supplemental notes. However, the respective exemplary embodiments and the respective variations are not limited to the following description.

### (Supplemental note 1)

A disaster response system, including:
a server device;
a relay device that is communicable with the server device; and
a plurality of disaster-sensing devices each of which is arranged at a predetermined position, the predetermined position being within a range wirelessly communicable with at least one of another disaster-sensing device and the relay device,
wherein each of the disaster-sensing devices includes:
a plurality of sensors each of which obtains one of a plurality of types of measurement data at an arrangement position in time series form;
a detection processing unit that processes at least one of the plurality of types of measurement data obtained by at least one of the plurality of sensors and generating detection index data that serve as an index of disaster occurrence detection;
a prediction processing unit that processes the plurality of types of measurement data obtained by the plurality of sensors in time series form and generates prediction index data that serve as an index of disaster occurrence prediction; and
a wireless communication circuit that transmits a wireless signal indicating at least one of the detection index data generated by the detection processing unit and the prediction index data generated by the prediction processing unit, and
the server device includes
an information collection unit that receives, from the relay device, the detection index data at each arrangement position and the prediction index data at each arrangement position transmitted from each of the plurality of disaster-sensing devices.

### (Supplemental note 2)

The disaster response system according to supplemental note 1, wherein
each of the disaster-sensing devices further includes
an operation control unit that, based on a plurality of instruction signals received successively by the wireless communication circuit, switches among a plurality of operation modes including a first operation mode in which the plurality of sensors are put in an inoperable state and the wireless communication circuit is switched between an operable state and an inoperable state cyclically, a second operation mode in which the plurality of sensors are put in the inoperable state and the wireless communication circuit is put in the operable state, and a third operation mode in which the plurality of sensors and the wireless communication circuit are put in operable states, and
the server device further includes
an instruction unit that causes to wirelessly transmit successively the plurality of instruction signals to the plurality of disaster-sensing devices by way of the relay device in such a way that, in each of the disaster-sensing devices, an operation time in the first operation mode, of the plurality of operation modes, becomes longest.

### (Supplemental note 3)

The disaster response system according to supplemental note 2, wherein
the server device further includes
an information obtaining unit that obtains two predetermined types of issuance information among weather warning issuance information and disaster alert issuance information transmitted from public institutions and two predetermined types of cancellation information among weather warning cancellation information and disaster alert cancellation information transmitted from public institutions,
the instruction unit of the server device, upon obtaining the respective types of issuance information and the respective types of cancellation information, causes a first instruction signal and a second instruction signal corresponding to the issuance information and a third instruction signal corresponding to the cancellation information to be wirelessly transmitted to the plurality of disaster-sensing devices successively by way of the relay device, and
the operation control unit of each of the disaster-sensing devices, upon receiving the first instruction signal, switches from the first operation mode to the second operation mode, upon receiving the second instruction signal, switches from the second operation mode to the third operation mode, and, upon receiving the third instruction signal, switches from the third operation mode to the first operation mode.

### (Supplemental note 4)

The disaster response system according to supplemental note 2 or 3, wherein
each of the disaster-sensing devices further includes
a time correction unit that corrects time of an internal clock based on common time information received by the wireless communication circuit that is put in an operable state cyclically during operating in the first operation mode, and
the instruction unit of the server device or the relay device matches a transmission timing of an instruction signal, among the plurality of instruction signals, for causing the first operation mode to be switched to another operation mode with a timing at which each of the disaster-sensing devices operating in the first operation mode is in an operable state that occur cyclically.

### (Supplemental note 5)

The disaster response system according to any one of supplemental notes 1 to 4, wherein
the wireless communication circuit of at least one disaster-sensing device among the plurality of disaster-sensing devices wirelessly relays the detection index data and the detection index data wirelessly transmitted from another disaster-sensing device to the relay device or still another disaster-sensing device.

### (Supplemental note 6)

The disaster response system according to any one of supplemental notes 1 to 5, wherein
each of the plurality of disaster-sensing devices further includes
a holding unit that holds a disaster-sensing device's own position information,
the information collection unit of the server device further receives, from the relay device, position information of each of the plurality of disaster-sensing devices transmitted from the disaster-sensing device, and
the server device further includes
a generation unit that generates screen data representing a position of each of the plurality of disaster-sensing devices using the position information received by the information collection unit.

### (Supplemental note 7)

The disaster response system according to any one of supplemental notes 1 to 6, wherein
each of the disaster-sensing devices further includes
a model generation unit that generates a relationship model on the plurality of types of measurement data based on the plurality of types of measurement data obtained by the plurality of sensors in time series form, and
the prediction processing unit of each of the disaster-sensing devices, using the relationship model, processes the plurality of types of measurement data obtained by the plurality of sensors and generates the prediction index data.

### (Supplemental note 8)

The disaster response system according to any one of supplemental notes 1 to 7, wherein
the plurality of sensors of each of the disaster-sensing devices obtain at least one of rainfall amount data and soil moisture content data and vibration data as the plurality of types of measurement data,
the detection processing unit of each of the disaster-sensing devices applies frequency analysis to the vibration data obtained by one of the plurality of sensors and, based on component data in a predetermined frequency band obtained through the frequency analysis, generates the detection index data, and
the prediction processing unit of each of the disaster-sensing devices applies frequency analysis to the vibration data obtained by one of the plurality of sensors and, based on frequency component data obtained through the frequency analysis and at least one of the soil moisture content data and the rainfall amount data obtained by another sensor, generates the prediction index data.

### (Supplemental note 9)

The disaster response system according to any one of supplemental notes 1 to 8, wherein
the detection processing unit detects a disaster occurrence based on data obtained through processing of the at least one of the plurality of types of measurement data and generates the detection index data indicating a result of the detection.

### (Supplemental note 10)

The disaster response system according to any one of supplemental notes 1 to 9, wherein
the prediction processing unit determines a degree of risk of disaster occurrence based on data obtained through processing of the plurality of types of measurement data and generates the prediction index data indicating the degree of risk.

### (Supplemental note 11)

A disaster-sensing device, including:
a detection processing unit that processes at least one type of measurement data obtained by a plurality of sensors each of which obtains one of a plurality of types of measurement data at an arrangement position in time series and generating detection index data that serve as an index of disaster occurrence detection; and
a prediction processing unit that processes the plurality of types of measurement data obtained by at least one of the plurality of sensors in time series and generating prediction index data that serve as an index of disaster occurrence prediction; and
a wireless communication circuit that transmits a wireless signal indicating at least one of the detection index data generated by the detection processing unit and the prediction index data generated by the prediction processing unit.

### (Supplemental note 12)

A disaster response method executed by a disaster response system including:
a server device;
a relay device that is communicable with the server device; and
a plurality of disaster-sensing devices each of which is arranged at a predetermined position, the predetermined position being within a range wirelessly communicable with at least one of another disaster-sensing device and the relay device,
the method including:
in each of the disaster-sensing devices:
   obtaining each one of a plurality of types of measurement data at an arrangement position in time series form;
   processing at least one type of measurement data among the plurality of types of measurement data obtained and generating detection index data that serve as an index of disaster occurrence detection;
   processing the plurality of types of measurement data obtained in time series form and generating prediction index data that serve as an index of disaster occurrence prediction; and
   transmitting a wireless signal indicating at least one of the detection index data and the prediction index data, and
in the server device,
   receiving, from the relay device, the detection index data at each arrangement position and the prediction index data at each arrangement position transmitted from each of the plurality of disaster-sensing devices.

### (Supplemental note 13)

The disaster response method according to supplemental note 12, wherein
each of the disaster-sensing devices includes a plurality of sensors and a wireless communication circuit,
the disaster response method further includes
switching an operation mode of each of the disaster-sensing devices among a plurality of operation modes including a first operation mode in which the plurality of sensors are put in an inoperable state and the wireless communication circuit is switched between an operable state and an inoperable state cyclically, a second operation mode in which the plurality of sensors are put in the inoperable state and the wireless communication circuit is put in the operable state, and a third operation mode in which the plurality of sensors and the wireless communication circuit are put in operable states, and
the switching of the operation mode is performed so that, in each of the disaster-sensing devices, an operation time in the first operation mode, of the plurality of operation modes, becomes longest.

### (Supplemental note 14)

The disaster response method according to supplemental note 13, the method further including:
the server device obtaining two predetermined types of issuance information among weather warning issuance information and disaster alert issuance information announced from public institutions and two predetermined types of cancellation information among weather warning cancellation information and disaster alert cancellation information announced from the public institution; and
the relay device, upon obtaining the respective issuance information and the respective cancellation information, wirelessly transmitting a first instruction signal and a second instruction signal corresponding to the issuance information and a third instruction signal corresponding to the cancellation information successively,
wherein the switching of the operation mode is performed in such a way that, upon receiving the first instruction signal, the first operation mode is switched to the second operation mode, upon receiving the second instruction signal, the second operation mode is switched to the third operation mode, and, upon receiving the third instruction signal, the third operation mode is switched to the first operation mode.

### (Supplemental note 15)

The disaster response method according to supplemental note 13 or 14, further including:
each of the disaster-sensing devices correcting time of an internal clock based on common time information received by the wireless communication circuit that is put in an operable state cyclically during operating in the first operation mode, and
the relay device wirelessly transmitting an instruction signal for causing the first operation mode to be switched to another operation mode at a timing when each of the disaster-sensing devices that is operating in the first operation mode is in an operable state that occurs cyclically.

### (Supplemental note 16)

The disaster response method according to any one of supplemental notes 12 to 15, the method further including:
at least one disaster-sensing device among the plurality of disaster-sensing devices wirelessly relaying detection index data and prediction index data wirelessly transmitted from another disaster-sensing device to the relay device or still another disaster-sensing device.

### (Supplemental note 17)

The disaster response method according to any one of supplemental notes 12 to 16,
the disaster response method further including:
each of the disaster-sensing devices wirelessly transmitting position information of its own;
the server device receiving position information of each of the disaster-sensing devices; and
the server device, using the received position information, generating screen data representing a position of each of the plurality of disaster-sensing devices.

### (Supplemental note 18)

The disaster response method according to any one of supplemental notes 12 to 17, the method further including
each of the disaster-sensing devices generating a relationship model on the plurality of types of measurement data based on the plurality of types of measurement data obtained in time series form,
wherein the generation of the prediction index data is performed in such a way as to process the plurality of types of measurement data obtained using the relationship model to generate the prediction index data.

### (Supplemental note 19)

The disaster response method according to any one of supplemental notes 12 to 18, wherein
the plurality of types of measurement data are at least one of rainfall amount data and soil moisture content data and vibration data,
the generation of the detection index data is performed in such a way as to apply frequency analysis to the vibration data and, based on component data in a predetermined frequency band obtained through the frequency analysis, generate the detection index data, and
the generation of the prediction index data is performed in such a way as to apply frequency analysis to the vibration data and, based on frequency component data obtained through the frequency analysis and at least one of the soil moisture content data and the rainfall amount, generate the prediction index data.

### (Supplemental note 20)

The disaster response method according to any one of supplemental notes 12 to 19, wherein
the generation of the detection index data is performed in such a way as to, based on data obtained through processing of the at least one type of measurement data, detect a disaster occurrence and generate the detection index data indicating the result of the detection.

### (Supplemental note 21)

The disaster response method according to any one of supplemental notes 12 to 20, wherein
the generation of the prediction index data is performed in such a way as to, based on data obtained through processing of the plurality of types of measurement data, determine a degree of risk of disaster occurrence and generate the prediction index data indicating the degree of risk.

### (Supplemental note 22)

A processing method of a disaster-sensing device, the method including:
obtaining respective ones of a plurality of types of measurement data at an arrangement position in time series form;
processing at least one type of measurement data among the plurality of types of measurement data obtained and generating detection index data that serve as an index of disaster occurrence detection;
processing the plurality of types of measurement data obtained in time series form and generating prediction index data that serve as an index of disaster occurrence prediction; and
transmitting a wireless signal indicating at least one of the detection index data and the prediction index data.

The present invention was described above through exemplary embodiments (and examples) thereof, but the present invention is not limited to the above exemplary embodiments (and examples). Various modifications that could be understood by a person skilled in the art may be applied to the configurations and details of the present invention within the scope of the present invention.

This application claims priority based on Japanese Patent Application No. 2014-043115, filed on Mar. 5, 2014, the entire disclosure of which is incorporated herein by reference.

### [Reference Signs List]

- 1: Disaster response system (System)
- 5: Communication network
- 10: Disaster-sensing device (Sensing device)
- 11, 26: Antenna
- 12: Sensor
- 13, 21, 31: CPU
- 14, 22, 32: Memory
- 15, 25: Wireless communication circuit
- 20: Relay device
- 24, 34: Communication circuit
- 30: Server device
- 35: Display device
- 51: Detection processing section
- 52: Prediction processing section
- 53: Wireless communication circuit
- 55: Model generation section
- 56: Operation control section
- 57: Time correction section
- 58: Holding section
- 61: Information collection section
- 63: Instruction section
- 65: Generation section
- 67: Information obtaining section

## Claims

1. A disaster response system, comprising:
a server device;
a relay device that is communicable with the server device; and
a plurality of disaster-sensing devices each of which is arranged at a predetermined position, the predetermined position being within a range wirelessly communicable with at least one of another disaster-sensing device and the relay device,
each of the disaster-sensing devices including:
a plurality of sensors each of which obtains one of a plurality of types of measurement data at an arrangement position in time series form;
a detection processing means for processing at least one of the plurality of types of measurement data obtained by at least one of the plurality of sensors and generating detection index data that serve as an index of disaster occurrence detection;
a prediction processing means for processing the plurality of types of measurement data obtained by the plurality of sensors in time series form and generating prediction index data that serve as an index of disaster occurrence prediction; and
a wireless communication circuit that transmits a wireless signal indicating at least one of the detection index data generated by the detection processing means and the prediction index data generated by the prediction processing means,
the server device including
an information collection means for receiving, from the relay device, the detection index data at each arrangement position and the prediction index data at each arrangement position transmitted from each of the plurality of disaster-sensing devices.

2. The disaster response system according to claim 1, wherein
each of the disaster-sensing devices further includes
an operation control means for, based on a plurality of instruction signals received successively by the wireless communication circuit, switching among a plurality of operation modes including a first operation mode in which the plurality of sensors are put in an inoperable state and the wireless communication circuit is switched between an operable state and an inoperable state cyclically, a second operation mode in which the plurality of sensors are put in the inoperable state and the wireless communication circuit is put in the operable state, and a third operation mode in which the plurality of sensors and the wireless communication circuit are put in operable states, and
the server device further includes
an instruction means for causing to wirelessly transmit successively the plurality of instruction signals to the plurality of disaster-sensing devices by way of the relay device in such a way that, in each of the disaster-sensing devices, an operation time in the first operation mode, of the plurality of operation modes, becomes longest.

3. The disaster response system according to claim 2, wherein
the server device further includes
an information obtaining means for obtaining two predetermined types of issuance information among weather warning issuance information and disaster alert issuance information and two predetermined types of cancellation information among weather warning cancellation information and disaster alert cancellation information,
the instruction means of the server device, upon obtaining the respective types of issuance information and the respective types of cancellation information, causes a first instruction signal and a second instruction signal corresponding to the issuance information and a third instruction signal corresponding to the cancellation information to be wirelessly transmitted to the plurality of disaster-sensing devices successively by way of the relay device, and
the operation control means of each of the disaster-sensing devices, upon receiving the first instruction signal, switches from the first operation mode to the second operation mode, upon receiving the second instruction signal, switches from the second operation mode to the third operation mode, and, upon receiving the third instruction signal, switches from the third operation mode to the first operation mode.

4. The disaster response system according to claim 2 or 3, wherein
each of the disaster-sensing devices further includes
a time correction means for correcting time of an internal clock based on common time information received by the wireless communication circuit that is put in an operable state cyclically during operating in the first operation mode, and
the instruction means of the server device or the relay device matches a transmission timing of an instruction signal, among the plurality of instruction signals, for causing the first operation mode to be switched to another operation mode with a timing at which each of the disaster-sensing devices operating in the first operation mode is in an operable state that occur cyclically.

5. The disaster response system according to any one of claims 1 to 4, wherein
the wireless communication circuit of at least one disaster-sensing device among the plurality of disaster-sensing devices wirelessly relays the detection index data and the detection index data wirelessly transmitted from another disaster-sensing device to the relay device or still another disaster-sensing device.

6. The disaster response system according to any one of claims 1 to 5, wherein
each of the plurality of disaster-sensing devices further includes
a holding means for holding a disaster-sensing device's own position information,
the information collection means of the server device further receives, from the relay device, position information of each of the plurality of disaster-sensing devices transmitted from the disaster-sensing device, and
the server device further includes
a generation means for generating screen data representing a position of each of the plurality of disaster-sensing devices using the position information received by the information collection means.

7. The disaster response system according to any one of claims 1 to 6, wherein
each of the disaster-sensing devices further includes
a model generation means for generating a relationship model on the plurality of types of measurement data based on the plurality of types of measurement data obtained by the plurality of sensors in time series form, and
the prediction processing means of each of the disaster-sensing devices, using the relationship model, processes the plurality of types of measurement data obtained by the plurality of sensors and generates the prediction index data.

8. The disaster response system according to any one of claims 1 to 7, wherein
the plurality of sensors of each of the disaster-sensing devices obtain at least one of rainfall amount data and soil moisture content data and vibration data as the plurality of types of measurement data,
the detection processing means of each of the disaster-sensing devices applies frequency analysis to the vibration data obtained by one of the plurality of sensors and, based on component data in a predetermined frequency band obtained through the frequency analysis, generates the detection index data, and
the prediction processing means of each of the disaster-sensing devices applies frequency analysis to the vibration data obtained by one of the plurality of sensors and, based on frequency component data obtained through the frequency analysis and at least one of the soil moisture content data and the rainfall amount data obtained by another sensor, generates the prediction index data.

9. The disaster response system according to any one of claims 1 to 8, wherein
the detection processing means detects a disaster occurrence based on data obtained through processing of the at least one of the plurality of types of measurement data and generates the detection index data indicating a result of the detection.

10. The disaster response system according to any one of claims 1 to 9, wherein
the prediction processing means determines a degree of risk of disaster occurrence based on data obtained through processing of the plurality of types of measurement data and generates the prediction index data indicating the degree of risk.

11. A disaster-sensing device, comprising:
a detection processing means for processing at least one type of measurement data obtained by a plurality of sensors each of which obtains one of a plurality of types of measurement data at an arrangement position in time series and generating detection index data that serve as an index of disaster occurrence detection; and
a prediction processing means for processing the plurality of types of measurement data obtained by at least one of the plurality of sensors in time series and generating prediction index data that serve as an index of disaster occurrence prediction; and
a wireless communication circuit that transmits a wireless signal indicating at least one of the detection index data generated by the detection processing means and the prediction index data generated by the prediction processing means.

12. A disaster response method executed by a disaster response system including:
a server device;
a relay device that is communicable with the server device; and
a plurality of disaster-sensing devices each of which is arranged at a predetermined position, the predetermined position being within a range wirelessly communicable with at least one of another disaster-sensing device and the relay device,
the method comprising:
in each of the disaster-sensing devices:
obtaining each one of a plurality of types of measurement data at an arrangement position in time series form;
processing at least one type of measurement data among the plurality of types of measurement data obtained and generating detection index data that serve as an index of disaster occurrence detection;
processing the plurality of types of measurement data obtained in time series form and generating prediction index data that serve as an index of disaster occurrence prediction; and
transmitting a wireless signal indicating at least one of the detection index data and the prediction index data, and
in the server device,
receiving, from the relay device, the detection index data at each arrangement position and the prediction index data at each arrangement position transmitted from each of the plurality of disaster-sensing devices.

13. A disaster sensing method, comprising the steps that are executed by each of the disaster-sensing devices in the disaster response method according to claim 12.

14. A processing method of a disaster-sensing device, the method comprising:
obtaining a plurality of types of measurement data at an arrangement position in time series form;
processing at least one type of measurement data among the plurality of types of measurement data obtained and generating detection index data that serve as an index of disaster occurrence detection;
processing the plurality of types of measurement data obtained in time series form and generating prediction index data that serve as an index of disaster occurrence prediction; and
transmitting a wireless signal indicating at least one of the detection index data and the prediction index data.
